# EUROPEAN PATENT APPLICATION

(11) **EP 4 044 553 A1**
(43) Date of publication of application: **17.08.2022**
(21) Application number: 21157226.8
(22) Date of filing: 15.02.2021
(51) Int. Cl.: H04L 29/06, H04W 12/106

(54) **METHOD AND DEVICE TO PROVIDE A SECURITY LEVEL FOR COMMUNICATION**

(71) Applicant: Koninklijke Philips N.V., 5656 AG Eindhoven (NL)
(72) Inventor: BERNSEN, Johannes Arnoldus Cornelis, 5656 AE Eindhoven (NL)
(74) Representative: Philips Intellectual Property & Standards

(57) **Abstract**

Devices (110,120) and methods are described to establish secure communication between a first and a second device over a physical channel according to a security protocol. The protocol establishes first integrity data in the first device and second integrity data in the second device. The protocol has at least two security levels. The applied security level is selectable based on grading information transferred via the physical channel. Advantageously, a grading indicator indicative of a minimum security level as minimally required in at least one of the first device (110) and second device (120) is transferred via the physical channel, while integrity protection of the grading indicator is provided based on the integrity data. Thereby, a man-in-the-middle attack by a further device (130) to downgrade the security level may be prevented.

## Description

### FIELD OF THE INVENTION

The invention relates to a method and device to establish a security level for communication between a first device and a second device over a physical channel according to a security protocol.

The present invention relates to the field of security of wireless or wired data communication, and more in particular provides devices and methods applying a security protocol. The security protocol establishes first integrity data in the first device and second integrity data in the second device. The integrity data may provide integrity protection of messages transferred via the physical channel. The security protocol may provide various security levels, a security level for example defining at least one specific security measure, cryptographic algorithm, security option or key length.

### BACKGROUND OF THE INVENTION

Devices may securely connect to a wireless network, for example according the Device Provisioning Protocol (DPP, see [DPP]), which is a protocol for configuring Wi-Fi devices using a DPP Configurator device in order to get access to a Wi-Fi Access Point (AP). A device trying to get access is called a DPP Enrollee. When a device has been configured by DPP, it has received from the DPP Configurator a DPP Configuration Object. The DPP Configuration Object contains a so-called Connector or DPP Connector. The Connector is signed by the DPP Configurator. The Connector contains a public key, the network access key, netAccessKey or NAK, that belongs to the device. The NAK is present in-the-clear in the Connector. There may be other information present in-the-clear in a Connector, e.g. an expiry timestamp. The DPP Configuration Object is not signed, so it lacks integrity protection. However, the message in which it is sent to the DPP Enrollee, the DPP Configuration Response message, is integrity protected by a symmetric key negotiated between DPP Configurator and DPP Enrollee in the preceding DPP Authentication protocol. It is noted that, in this application, the acronym DPP means any version of DPP, e.g. DPP R1, DPP R2 and any successor release.

In view of the increase in the number of connected devices there is a growth in the interest in security, e.g. for privacy and protection against tracking by third parties. Tracking means following the location of a device across multiple communication sessions in a network, e.g. based on recurring data in messages of the device. Document WO2020043634A1 [2018PF00508] describes an upgraded security protocol having an added security option that provides protection against said tracking.

So, existing security protocols may be upgraded with at least one enhanced security level. For interaction with existing devices earlier versions of such protocols are usually also supported. The applied security level, e.g. a version or options of the security protocol to be used, may be negotiated using grading information that is transferred via the physical channel between devices during setting up the communication. The grading information may, for example, be an explicit indication that a specific version or security option of the protocol is supported by a device. The grading information may also be implicit by other protocol data, e.g. by including a key of a specific length if multiple key lengths are supported. By exchanging said grading information the applied level of security is determined. However, such messages may be intercepted and modified by a device also operating on the physical channel, which is called a 'man-in-the-middle' attack (MitM). Due to said manipulation of the grading information, a security level may be established that is lower than intended, which may be called 'downgrading' of the security level.

### SUMMARY OF THE INVENTION

It is an object of the invention to provide methods and devices for protection against downgrading of the security level, e.g. via said MitM, for alleviating at least one of the above mentioned security problems. For this purpose, devices and methods are provided as defined in the appended claims. According to an aspect of the invention a method to establish a security level for communication between a first device and a second device over a physical channel according to a security protocol is provided as defined in claim 1. According to further aspects of the invention, devices and methods are provided as defined in the independent claims.

The security protocol may provide establishing first integrity data in the first device and second integrity data in the second device. The integrity data may be applied for providing integrity protection of messages transferred via the physical channel. For example, the first integrity data may be the public key of the second device which may be stored in the first device, while the second integrity data may be the signature set by the second device using the corresponding private key. The first integrity data may also be the signature of a Connector or certificate supplied by a third party to the first device.

The security protocol may provide at least two security levels, the security level being selectable based on grading information, e.g. a basic security level and at least one upgraded security level. The actual security level to be applied is determined based on grading information via the physical channel. The grading information is transferred via the physical channel, and may be part of one or more protocol messages, either explicit or implicit, or may be embodied in separate messages that are exchanged. Any message containing either explicit or implicit grading information may be called a grading message in this document. Grading messages are transferred via the physical channel. So, grading information means any data suitable for establishing one or more grades of security that a device can provide, and to negotiate the grade to be used between devices for communication, privacy protection, integrity protection, authentication, accessing a network, etc. For example, grading information may contain a version indicator of the security protocol that is supported by the device. A specific version number may indicate a range of security options the other device may select as specified by the protocol specification for that version.

The method and devices are arranged to transfer, via the physical channel, a grading indicator indicative of a minimum security level that is minimally required in at least one of the first and second device. Furthermore, the devices and methods provide integrity protection of the grading indicator based on the integrity data. The grading indicator may be transferred separately via the physical channel or via a different channel, or as part of a grading message.

The grading information may be integrity protected in full, in part or not at all. In contrast, the grading indicator is always completely integrity protected. Hence, the grading indicator prevents that an MitM attack on the non-integrity protected parts of the grading messages causes a negotiated security below a certain level or helps to maintain a certain minimum security in the event of changing the set-up of a server or client without requesting new certificates.

Effectively, a device may send the grading indicator and the device itself or the recipient may subsequently apply the minimum security level as indicated by the grading indicator. Also, when two devices cooperate, they apply at least the level of security as indicated by the grading indicator. Moreover, when two devices exchange grading messages showing that a high grade of security is supported on both sides, which grade is higher than required by the grading indicator, such higher security level may also be also selected. However, downgrading to a security level lower than indicated in the grading indicator is blocked. Hence, where grading messages would enable legacy communication on a lower grade of security supported on both sides of a communication link, such link can now be prevented when it would apply a security level lower than the level indicated in the grading indicator. Similarly, when receiving a message containing the grading indicator and upon verifying the integrity thereof, the device can block or abort any communication having a security level lower than indicated in the grading indicator.

Advantageously, said grading information indicates at least one level of security, which can be seen as a proposal, while the grading indicator indicates restrictions of the level(s) of security that may be actually used. So, in common language: "whatever has been mentioned in the grading message(s), one must use at least level X", or "whatever has been mentioned in the grading message(s), one must use at least level X if one supports it, but otherwise at least level Y has to be used (with level Y less secure than level X)".

Providing integrity protection covers both the action at the sending side and the action at the receiving side. For example, providing integrity protection of the grading indicator based on the integrity data may involve signing the grading indicator message by the device, and checking the signature when receiving a message. Also, providing integrity protection may be an act of sending, by a first device, an object containing a grading indicator, the object (so e.g. a Connector) being signed by yet a third device. The receiver side then verifies the signature using respective key material regarding the third device. For example, this may occur during negotiating of the use of PFS and of tracking prevention during the Network Introduction protocol as described later on.

According to a further aspect of the invention, the security protocol is based on a device provisioning protocol that further requires a configurator adapted to establish communication between the first device and the second device in a wireless network, for example DPP. The configurator is arranged for inserting the grading indicator in a connector message and sending the connector message to the first device. A processor in the first device is arranged for receiving the connector message and retrieving the grading indicator from the connector message.

Further preferred embodiments of the devices and methods according to the invention are given in the appended dependent claims, disclosure of which is incorporated herein by reference.

### BRIEF DESCRIPTION OF THE DRAWINGS

These and other aspects of the invention will be apparent from and elucidated further with reference to the embodiments described by way of example in the following description and with reference to the accompanying drawings, in which
Fig 1 shows a system in which the invention may be practiced,
Fig. 2a shows a computer readable medium, and
Fig, 2b shows in a schematic representation of a processor system.

The figures are purely diagrammatic and not drawn to scale. In the Figures, elements which correspond to elements already described may have the same reference numerals.

### DETAILED DESCRIPTION OF EMBODIMENTS

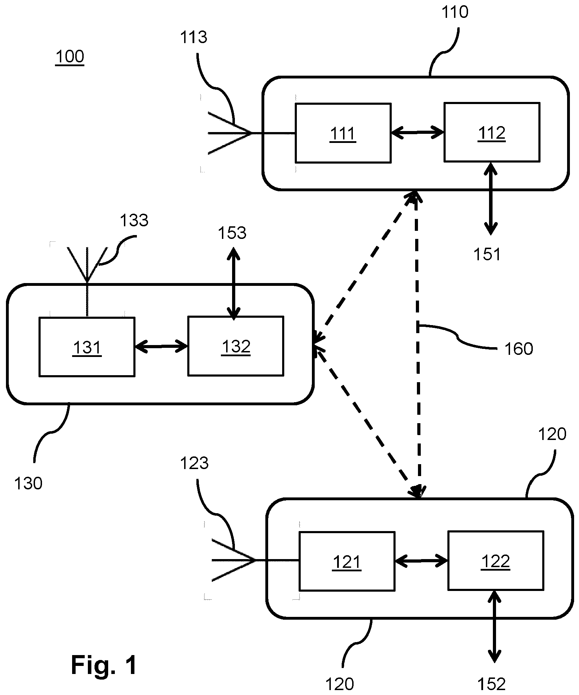

Fig. 1 shows a system 100 comprising first 110, second 120 and third devices 130. Each of these devices has a communication module 111, 121, 131 comprising suitable transmitters /receivers for communication over a physical channel 160 such as Wi-Fi, Bluetooth or a wired network. The devices may have an input/output unit for communicating over a wired physical channel, and/or comprise at least one antenna 113, 123, 133 acting as input/output for a wireless physical channel. Each of the devices would operate under the control of a processor 112, 122, 132. The communication module, the processor and further elements of the device may be integrated in a single system on a chip. Each of the devices may have a user interface 151, 152, 153 having at least one user control element. For example, the user control element may comprise a touch screen, various buttons, a mouse or touch pad, etc. Buttons may be traditional physical buttons, touch sensors, or virtual buttons, e.g. on a touch screen or icons to be activated via a mouse. The user interface may also be a remote user interface.

In practice the first device could correspond to a portable device such as a mobile phone, laptop or tablet having an end user. It could also be an IoT (internet of things) type of device. The second device could correspond to a server, an access point, a router, a further portable device or IoT device, etc. The user of the first device may be interested in getting connected to the second device (the access point) for accessing one or more resources provided via the second device. The third device is not actually part of the invention, but it corresponds to a so-called man-in-the-middle, i.e. a device which is used by a malicious third party to intercept, modify or replace messages to and from the first device.

In this application, the word "certificate" is meant to denote a blob of data that includes at least a public key of the owner of the certificate. An example of a certificate as meant in this application is an X509 v3 [RFC 5280] certificate. The owner may be called "Subject" and the public key may be called "Subject Public Key". Said blob is digitally signed by a Certificate Authority (CA), which may be called "Issuer". Except for so-called root certificates, certificates are signed by another entity ("Issuer") than the owner ("Subject") of the public key ("Subject Public Key") in the certificate. A root certificate is signed by the owner itself, i.e. the elements "Issuer Name" and "Subject Name" are the same.

The public key to use to verify the signature of a certificate can be found as "Subject Public Key" in another certificate of which the "Subject Name" is the same as the "Issuer Name" of the certificate to be verified. In case this other certificate is a root certificate, the "Subject Public Key" in it can be used to verify the signature of it. If it is not a root certificate, so issued by yet another issuer, Issuer2, its signature can be checked with the "Subject Public Key" in yet another certificate that has Issuer2 listed in its "Subject Name" element. Signature checking of a certificate may therefore involve the checking of signatures of several certificates in a so-called certificate tree up-to and including the root certificate of that certificate tree.

A DPP Connector is, like a certificate, also a blob of data that includes at least a public key of the owner of the DPP Connector, i.e. the device which has been configured with it by a DPP Configurator. This blob is digitally signed not by a CA but by a DPP Configurator. One difference between the latter two is that a CA is publicly known and of which several properties, such as its Issuer Name or its root certificate are public knowledge and can be found on the internet, while a DPP Configurator is not publicly known. For example, Digicert provides a CA (www.digicert.com). A list of root certificates is provided on https://www.digicert.com/kb/digicert-root-certificates.htm and the "DigiCert Assured ID Root CA" available at https://cacerts.digicert.com/DigiCertAssuredIDRootCA.crt. When inspecting this root certificate using an appropriate tool, e.g. the website https://lapo.it/asnljs/, one can e.g. see that the "Issuer Name" and "Subject Name" are "countryName US; organizationName DigiCert Inc; organizationalUnitName www.digicert.com; commonName DigiCert Assured ID Root CA".

Another difference between the certificate and the connector is how a device is configured with the public key to verify signatures. In case of certificate signature verification, the public key to do that is provided in the form of a certificate itself, together with all certificates in the certificate tree up-to and including the root certificate of that tree. Certificate trees are installed in devices by special, secure mechanisms. This may be done e.g. at manufacturing time. This may also be done e.g. by using a secure Internet connection. For example, Microsoft uses a dedicated, secure connection between Windows devices and its servers to provision Windows devices with the latest certificate trees. The web browser Firefox, even when running under a Windows operating system, uses its own dedicated, secure channel between Firefox installations and a server from Mozilla for provisioning the Firefox installations with the latest certificate trees. The security involved is not meant for keeping the certificate secret, but for ensuring that only valid certificate trees are provisioned. A device provisioned, e.g. by a hacker, with a malicious root certificate will start trusting web sites that provide certificates signed with the public key in (certificates signed by) that root certificate. In contrast, the DPP Configurator public key is not provisioned in an Enrollee in the form of a certificate, but in a message that is (integrity) protected by a symmetric key. In the following, various examples of grading information in DPP are discussed.

In the DPP Reconfiguration Authentication protocol, a first message is the DPP Reconfiguration Announcement message. It is not integrity protected.

Enrollee -> Configurator: SHA256(C-sign-key), group, A-NONCE, E'-id
The attribute "SHA256(C-sign-key)" indicates the Configurator signing key. The Configurator may have multiple signing keys. They may belong to the same elliptic curve group (e.g. NIST P-256) or may belong to different elliptic curve groups (e.g. NIST P-256 and NIST P-384). So this attribute indicates the Configurator signing algorithm and the signing algorithm security level, so serves as grading information. The attribute "group" indicates the elliptic curve group of the NAK of the Enrollee. Therefore, this attribute indicates the algorithm to use to compute the PMK and it indicates the security level (more specific here the number of bits) of the PMK, so also contributes to the grading information. The attributes "A-NONCE" and "E'-id" are elliptic points on the same elliptic curve as the Configurator signing key, so do not add more information on the security level.

If an Enrollee only supports one curve, e.g. the mandatory NIST P-256 curve, then the device only supports this as a first level. A second security level is then P-256 plus tracking prevention, which may be indicated by a parameter or version indication. So the function tracking prevention is known to the Configurator at this point, but not required as such.

A second message in the DPP Reconfiguration Authentication protocol is the DPP Reconfiguration Authentication Request message. It is not integrity protected, except for the attribute "C-Connector".

Configurator -> Enrollee: Transld, Protocol Version, C-Connector, C-nonce
The attribute "Transld" is a random number to be copied in the next two protocol messages. The attribute "Protocol Version" denotes the DPP protocol version that the Configurator supports. If different versions offer or prescribe other levels of security, this attribute indicates a security level. This attribute is not integrity protected. When the DPP R3 spec would support the use of tracking prevention, this attribute can be used to select the "upgraded security level", i.e. use tracking prevention during reconfiguration. Alternatively in DPP R3, a value of 3 (denoting DPP release 3) for the attribute "Protocol Version" may specify that the Configurator supports that the Enrollee can use tracking prevention for the NAK in the Enrollee Connector in the next message. The attribute "Protocol Version" serves as grading information, whereby this message may be considered a grading message where the Configurator indicates that the Enrollee has two options, use tracking prevention or not. The attribute "C-Connector" contains an indication of the Configurator signing key, namely the identifier "kid" in the he JSON Web Signature (JWS) Protected Header of the Connector, see section 4.2 of [WFEC_2]. The Configurator may have multiple signing keys. They may belong to the same elliptic curve group (e.g. NIST P-256) or may belong to different elliptic curve groups (e.g. NIST P-256 and NIST P-384). The Configurator Signing key should be the one indicated by the Enrollee with the attribute "group". So this attribute indicates the Configurator signing algorithm and the signing algorithm security level. This attribute contains also an NAK. It should be on the same curve as the NAK of the Enrollee. Therefore, this attribute also indicates the algorithm to use to compute the PMK and it indicates the security level (e.g. specifically the number of bits) of the PMK.

The attribute "C-Connector" may contain the grading indicator to indicate that the Enrollee can or must use tracking prevention for its NAK. The grading indicator which indicates that the Enrollee has to use tracking prevention for its NAK when communication with the Configurator, may also be sent by the Configurator as part of the DPP Configuration Response message, either inside one of the Connectors in this message or in another part of this message.

A further example relates to a Network Introduction protocol. The following message is the DPP Peer Discovery Request message:
device B → device A: Transaction ID, ConnectorB, [Protocol Version]
Device B is a non-AP Wi-Fi device and device A is a Wi-Fi AP device.
The attribute "Transld" is a random number to be copied in the next protocol message. The attribute "ConnectorB" contains an indicator of the Configurator signing key and the NAK of the non-AP device, which information may be considered as grading information. If the non-AP device only support one curve, e.g. P-256, only one security level can be selected with this information. The attribute "ConnectorB" may contain the grading indicator to indicate that the AP can or must use tracking prevention for the NAK in its Connector, or must use PFS. The optional attribute "Protocol Version" indicates the version of the DPP protocol that the non-AP device supports. PFS has been defined in DPP R2. When DPP R2 is indicated in this attribute, the AP may decide to use or not to use PFS. Therefore, this attribute may also contribute to the grading information.

Note that if the Enrollee wanted to use tracking prevention for the NAK in its Connector, it has to obtain information that the AP supports this functionality in another way, e.g. from a further Information Element denoting this that the AP includes in its Beacons or Probe Responses. Such element can be considered grading information.

In a further example the DPP Peer Discovery Response message is:
device A → device B: Transaction ID, DPP Status, ConnectorA, [Protocol Version]
The attribute "DPP Status" contains the value DPP_STATUS_OK in this case. When this attribute has another value, the attributes "ConnectorA" and "Protocol Version" are omitted. The function of the other attributes is the same as described above for the DPP Peer Discovery Request message, but with the devices swapped.

In the following, specific embodiments of the invention are described with respect to general system of the above.

In a first exemplary embodiment a device acts as a first device adapted to establish a security level for communication between the first device and a second device over a physical channel according to a security protocol as described earlier. The device has a processor arranged for sending or receiving via the physical channel a grading indicator indicative of a minimum security level as minimally required in at least one of the first and second device. When sending, the processor includes protection data for the grading indicator based on the integrity data. When receiving, the processor verifies the protection data based on the integrity data. Subsequently, the processor applies at least the minimum security level for the communication between the first device and the second device.

Optionally, the security protocol is based on a device provisioning protocol that further requires a configurator adapted to establish communication between the first device and the second device in a wireless network. The configurator is arranged for inserting the grading indicator in a connector message and sending the connector message to the first device. The processor in the first device is arranged for receiving the connector message and retrieving the grading indicator from the connector message.

Optionally, the security protocol according to the first security level requires determining a pairwise master key in both the first and the second device based on private and public key material, the pairwise master key being used for determining session keys for encrypted communication between the first device and the second device. Furthermore, the security protocol according to the second security level requires determining the pairwise master key involving ephemeral Diffie-Hellman key pairs and the processor in the device is arranged to apply the second security level when so indicated by the grading indicator. As an example of "involving ephemeral Diffie-Hellman key pairs" PFS is described below, PFS providing an example of an upgraded security level.

Usually, in the above embodiments, in the security protocol at least one grading message lacks integrity protection. Hence such messages are prone to a MitM attack. Optionally, various parameters in such messages may be protected by transferring said grading indicator at some point in the enhanced security protocol. The grading indicator may provide restrictions, boundaries or requirements on various elements that may be affected by manipulating said grading message lacking integrity protection.

In various embodiments, the communication channel may be Wi-Fi. The second device may correspond to an access point (AP), the first device attempting to connect to the AP, e.g. via the SAE protocol, see [WPA3] or clause 12.4 of [802.11]. In each of the devices, the protocol according to the invention is being executed in module controller (113,123), the processor (114, 124) or by both cooperating in executing the protocol. The embodiment relates to negotiating a Perfect Forward Security (PFS) feature, which has been added in version 2 of DPP, see section 6.6.3 "Network Access Protocols" of [WFEC2]. So, a grading message may contain a version indicator of the security protocol that is supported by the device. For example, a version indication may embody unprotected "grading information" indicating that a device supports a particular security level, e.g. "V3" if it is a V3 device, while V3 implies that a security option like PFS may be used.

When the device wants to connect to an AP using DPP, it sends its Connector to the AP in a so-called DPP Peer Discovery Request frame. This frame is not encrypted. This frame is also not integrity protected, which means that it may be changed by a man-in-the-middle (MitM) attacker. Note that the Connector cannot be changed by a MitM without the recipient noticing this change, because it is integrity protected by the signature from the DPP Configurator device, but all other attributes in the DPP Peer Discovery Request frame have no integrity protection.

An AP receiving a DPP Peer Discovery Request frame will check the Connector in it. When it finds the Connector legitimate, i.e. the signature is correct, the Connector has not expired and the Connector is about a network that the AP provides, the AP can reply with a DPP Peer Discovery Response frame. This frame contains the Connector of the AP, which has to be signed by the same Configurator that signed the device Connector. The device receiving the DPP Peer Discovery Response frame will check the AP Connector in the same way as the AP did. When the device finds that the AP Connector is correct and matches with its own Connector, see section 6.4.2 "Connector Group Comparison" of [DPP], it can use its own private NAK and the public NAK from the AP Connector to compute the Pairwise Master key (PMK), see section 6.4 "Network introduction protocol" of [DPP], in Diffie-Hellman fashion, see [DH]. The AP can compute the same value for the PMK using its own private NAK and the public NAK in the device Connector. The PMK is the basis for computing session keys between the device and the AP, using the so-called 4-way handshake, see [802.11]. After a successful 4-way handshake, the device is associated with the AP and the transmissions between the device and AP are encrypted and integrity protected with a session key derived from the PMK and from in-the-clear information sent during the 4-way handshake.

In version 2 of DPP, which is now called Wi-Fi Easy Connect^{™} [WFEC2], the DPP Introduction Protocol has been improved. A problem with release 1 is that the PMK between a Wi-Fi device and an AP is always the same. Suppose an attacker has captured all Wi-Fi traffic between a device and an AP, so DPP Network Introduction protocol exchanges, 4-way handshakes for computing session keys and encrypted exchanges after association. When the attacker either hacks the device or the AP and obtains one of the private NAKs, the attacker can compute the PMK between them, because the hacker has obtained the public NAK from the other device from the Connecter of the other device which Connector was sent in-the-clear. Using the PMK and the nonces in the captured a 4-way handshake, the attacker can compute the session key and then decrypt all encrypted transmission between the two devices.

In order to protect against this attack, the PFS feature has been added in version 2 of DPP. The computation of the PMK now also involves ephemeral Diffie-Hellman key pairs (public/private ECC keys). Because the private keys of the ephemeral Diffie-Hellman key pairs have to be deleted by a device after use, an attacker hacking any of the two devices will not be able to obtain these ephemeral private keys and hence is not able to compute the PMK used and is not able to decrypt the encrypted transmissions that occurred in the past between the device and the AP.

The problem with PFS as specified in [WFEC_2] is that its use is negotiated in a non-secure manner. When the device wants to use PFS, it adds a Protocol Version attribute to the DPP Peer Discovery Request frame with the value 2 or higher. When the AP receives a DPP Peer Discovery Request frame with a Protocol Version attribute with the value of 2 or higher and if it supports PFS, it will respond with a DPP Peer Discovery Response frame with a Protocol Version attribute with the value of 2 or higher. In that case, both devices will compute the PMK using PFS as specified in section 6.6.3 "Network Access Protocols" of [WFEC2]. Since no attribute in a DPP Peer Discovery Request or Response frame other than the Connector is integrity protected, a MitM attacker can change either of the two Peer Discovery frames such that the Protocol Version attribute gets a value of less than 2, or that the Protocol Version attribute is completely removed. If that is the case in either one or both of the Peer Discovery frames, the device and AP will not use PFS. Such an attack is an example of a downgrade attack, which should be prevented.

One possible, apparently simple option is that a device or AP is set up such that it will not compute a PMK if PFS is not used, but that is not flexible. It may e.g. be perfectly OK for a device to connect to an AP without using PFS if the information obtainable through that AP requires not a high degree of security, e.g. a public network. However, it may be that a device must always use PFS for an AP that provides access to a private or a company network.

Another problem with this apparently simple option is that the user now has to do two separate things to set up a device or AP. The first thing is that the user has to use a DPP Configurator to configure the device or AP and the second thing is that the user has to go through the device or AP set up procedure to configure it to use PFS always.

A solution is described now that makes the setup of PFS simpler for the user than that of the apparently simple solution described above and the use of PFS more flexible than in the simple option above.

A Configurator is the central device in DPP that configures networks. The Configurator is now also used to control in a secure manner whether PFS has to be used for a network or not, thus preventing a downgrade attack on the use of PFS and making it simpler for the user to set up the use of PFS, which is a technique that both devices must use. If PFS has to be used for a certain network, the Configurator inserts the grading indicator, i.e. information indicating that PFS has to be used, in every Connector it generates for this network, so both for devices as well as APs. This information can e.g. be in the form of a minimum version number minimally to be used, e.g. {..., "minVersion:3", ...} or in the form of a more specific indication, e.g. {..., "usePFS":true, ...}. Devices that use a Connector in a Peer Discovery frame which Connector contains information to use PFS will refuse to connect to a device from which they received a Connector that does not specify that PFS has to be used.

Therefore, even if a MitM has changed the version information in a Peer Discovery frame, it cannot change the information in the Connectors instructing the devices to use PFS, because the Connector is integrity protected by the signature, and checking will fail when a Connector has been changed.

For networks that do not require the use of PFS, the Configurator can insert information that PFS does not have to be used by inserting e.g. {..., "usePFS":false, ...} in all Connectors generated for that network, or the Configurator may insert no information about the use of PFS in all Connectors, thereby leaving it to the devices and APs themselves to use PFS or not, e.g. by using DPP release 1 or DPP release 2 with the appropriate setting of the Protocol Version attribute values in the Peer Discovery frames.

Optionally, the Configurator may, for backwards compatibility reasons, configure devices supporting a certain minimum version of the specification, e.g. version 3, with Connectors that indicate that the device will only connect to other devices that support this minimum version or higher if PFS is used, but is allowed to connect without using PFS to devices that support a lower version than the minimum. As an example, a Configurator may indicate this using {..., "mustUsePFSIfVersionAtLeast":3, ...} in the Connector and a device configured with such a DPP Connector will connect without insisting on the use of PFS to a device that has a Connector without any indication that PFS has to be used or not, so e.g. to a device that is conform DPP release 1 [DPP] or release 2 [WFEC_2]. This is because DPP release 1 [DPP] or release 2 [WFEC_2] Connectors do not contain version or use of PFS information. Note that with {..., XYZ, ... } we mean that ", XYZ" is inserted in the JSON code of the DPP Connector.

It is noted that a DPP Enrollee and a DPP Configurator can securely inform the other device of the highest version DPP they support in the DPP Authentication Request and DPP Authentication Response message, since the attribute used for the version information is integrity protected in each of these two messages. The highest supported version is not to be confused with the minimally required version as indicated in the grading indicator. Note furthermore that it is mandatory for a device or AP to support PFS in DPP release 2 [WFEC_2]. Therefore, a Configurator is certain of the DPP version that a DPP Enrollee supports, so is certain whether the Enrollee supports PFS or not and therefore knows for certain whether it can or cannot include the information that PFS has to be used in the Enrollee Connector.

A further embodiment relates to negotiation of device tracking prevention, where the security protocol according to the first security level does not prevent tracking of the first device across multiple communication sessions in the network based on recurring data in messages of the first device, and the security protocol according to the second security level requires avoiding or modifying said recurring data to prevent tracking. In the device, the processor is arranged to apply said tracking prevention when so indicated by the grading indicator.

Optionally, the security protocol is based upon the Device Provisioning Protocol for configuring Wi-Fi devices as defined in [DPP]. The connector message is a reconfiguration Connector based on the Connector generated for use in a Reconfiguration Authentication Request message as defined in the Device Provisioning Protocol. The configurator is arranged for inserting the grading indicator in the reconfiguration Connector, the grading indicator being indicative of a prevention constraint indicating that device tracking prevention should be used by a device that wants to be reconfigured.

In the device, the processor is arranged for retrieving the prevention constraint from the reconfiguration connector, and for applying tracking prevention during reconfiguration based on the prevention constraint. In a practical example, based on the grading indicator of the Configurator to the Enrollee, in which the Configurator indicates to the Enrollee that the Configurator itself supports tracking prevention, the Enrollee can use tracking prevention for the NAK in its Connector that it sends to the Configurator in the DPP Reconfiguration Response message. The prevention constraint may be sent as follows:
1. as part of its C-Connector in the DPP Reconfiguration Request message;
2. in the Connector sent by the Configurator to the Enrollee during Configuration, so in a DPP Configuration Response message; or
3. as part of the DPP Configuration Response message but not in any Connector in this message.

Note that the grading indicator is integrity protected in each of these three cases.

It is noted that said "grading indicator indicative of a minimum security level as minimally required" may mean, in addition to what is already explained, that, e.g. for backwards compatibility reasons or to enable to support low cost devices, devices not supporting the minimum security level may use a lower level, however only conditional upon further restrictions. For example, upon receiving the grading inicator and finding the minimum security leved unsupported, an additional request may be securely exchanged first, in which a legacy or low-cost device requests to use a lower level. Or, for example, an additional parameter incating an lower allowed level for backwards compatible devices can also be part of the grading indicator. However, if a device does support the minimum security level, it must use at least that minimum level.

In a practical example, devices according to DPP release 1 [DPP] and release 2 [WFEC_2] send their Connector in-the-clear to an AP in DPP Peer Discovery Request frames and APs send their Connector in-the-clear to a Wi-Fi device in DPP Peer Discovery Response frames. Since the Connector of a device or AP contains a (constant) public key of that device, the NAK, the device or AP can be tracked by any Wi-Fi device in RF range. The public NAK can serve as an identity of the device. This may violate the privacy of that device and is therefore a problem.

One of the extensions in DPP release 2 [WFEC2] is the DPP Reconfiguration Authentication protocol. A device that was configured by a DPP Configurator may have been successful in connecting to the network it was configured for, but it may encounter problems later on when connecting to an AP using its Connector. It may e.g. be that its Connector expired, or that the first device and/or the AP have been moved such that they accidentally became out of RF reach of one another. In case the device experiences connection problems with the AP, it may use the DPP Reconfiguration Authentication Protocol, see [WFEC_2], to indicate this problem to a Configurator and get reconfigured. A device that uses this protocol to be reconfigured is called an Enrollee in the DPP release 2 specification [WFEC_2].

A device according to DPP release 2 [WFEC_2] sends its Connector in-the-clear to a Configurator in a DPP Reconfiguration Authentication Response message. The Connector in this message is the same Connector as the device uses in DPP Peer Discovery Request frames for getting access to an AP. Therefore, devices can also be tracked by other devices that capture their DPP Reconfiguration Authentication Response message or DPP Peer Discovery Request frames.

A Configurator according to DPP release 2 [WFEC2] sends its Connector in-the-clear to an Enrollee in a DPP Reconfiguration Authentication Request message. However, the NAK in the Configurator Connector is ephemeral, i.e. it is randomly generated just for sending once, so a Configurator cannot be tracked through these messages.

Preventing devices and APs to be tracked as explained above is not supported by DPP release 2 [WFEC_2]. However, device tracking based on information in the DPP Reconfiguration Authentication protocol may be prevented by a privacy protection measure such as encrypting the NAKs in the Connectors, as described in [2018PF00508]. In addition, the use of a privacy protection measure must be negotiated between them.

Negotiating the prevention of device tracking based on information the DPP Peer Discovery Request and Result messages is not supported in DPP release 2 [WFEC2]. A simple option, similar to negotiating the use of PFS as explained above, would be using the Protocol Version attribute in the DPP Peer Discovery Request and/or Response frames. However, these are not integrity protected and a MitM can perform a downgrade attack by changing or removing the Protocol Version attributes.

Negotiating the prevention of device tracking based on information the DPP Reconfiguration Authentication messages is not supported in DPP release 2 [WFEC_2]. In a further simple option, a Configurator could add an attribute to the DPP Reconfiguration Authentication Request message signaling to the device that wants to be reconfigured, the Enrollee, that the Configurator supports device tracking prevention. This would enable the device to hide the NAK in its device Connector in its reply to the Configurator, the DPP Reconfiguration Authentication Response message. However, the DPP Reconfiguration Authentication Request message does not provide any integrity protection - there is no shared key established at that point in the protocol to enable integrity protection - and a MitM can in principle remove that attribute and thus perform a downgrade attack.

The following solution prevents a downgrade attack on the negotiation of the use of device tracking prevention in the DPP Reconfiguration Authentication Response message and in the DPP Peer Discovery Response frame.

A Configurator may securely control the use of device tracking prevention in DPP similar to controlling the use of PFS described above. In contrast to PFS, device tracking prevention is a technique that either device or both may use. E.g., APs may or may not be stationary. The location of a stationary AP may be known and will not change. Therefore, it may be acceptable for a stationary AP not to use device tracking prevention to its own Connectors in DPP Peer Discovery Response frames, while it supports devices that do apply device tracking prevention to their Connectors in the DPP Peer Discovery Request frames they send to the AP. However, many smart phones are able to serve as a hotspot, i.e. they can serve as a mobile Wi-Fi AP through which a Wi-Fi device associated with that mobile AP can get internet access through the mobile internet subscription of the smart phone. In contrast to a stationary AP, it makes sense to use device tracking prevention for a hotspot in a mobile phone or in mobile Wi-Fi hotspots other than smart phones.

An AP may signal a device, which wants to associate with the AP, in a grading message that the device can or has to use device tracking prevention for its Connector, e.g. in the DPP Peer Discovery Request frame. However, integrity protection is lacking at this point of the protocol, as the device has not received the Connector of the AP yet. Unprotected methods to detect whether to use device tracking prevention in a Connector is described in [2018PF00508].

A solution is now described for a device, which wants to associate with an AP, to let the AP know in a secure manner that the AP can use device tracking prevention in its Connector. The AP may send a DPP Peer Discovery Response frame to the device, after the AP has received the device Connector in the preceding DPP Peer Discovery Request frame. The Configurator now inserts the grading indicator in every Connector it generates for that device. The grading indicator indicates that device tracking prevention can or has to be used by an AP in DPP Peer Discovery Response frames. This information can e.g. be in the form of a general indication like a version number, e.g. {..., "version" :3, ...} or in the form of a more specific indication, e.g. {..., "mayUseTrackingPrevention":true, ...}, or {..., "hasToUseTrackingPrevention":true, ...}. Note that with {..., XYZ, ... } we mean that ", XYZ" is inserted in the JSON code of the DPP Connector. In case a device sends such a Connector in a DPP Peer Discovery Request frame to an AP and the device itself also uses device tracking prevention, e.g. by encrypting the NAK in its Connector by a method described in [2018PF00508], the AP first has to restore the received Connector as described in [2018PF00508] before it can check the signature of the Connector received and after a successful signature check can securely determine whether or not it can or has to use device tracking prevention.

A device (DPP Enrollee) according to DPP release 2 [WFEC_2] sends its Connector in-the-clear to a Configurator in a DPP Reconfiguration Authentication Response message. The Connector in this message is the same Connector as the device uses in DPP Peer Discovery Request frames for getting access to an AP. Therefore, devices can also be tracked by other devices that capture their DPP Peer Discovery Request frames.

In an embodiment, the DPP Configurator, when it is sending a DPP Reconfiguration Authentication Request message to a device (DPP Enrollee) that wants to be reconfigured, uses the grading indicator in the Connector to let the Enrollee securely know that it can or must use device tracking prevention when that Enrollee replies with a DPP Reconfiguration Authentication Response message. So, the Configurator inserts a grading indicator in its Connector it generates for use in its DPP Reconfiguration Authentication Request message. The grading indicator indicates, that device tracking prevention can be used by the Enrollee that wants to be reconfigured. This information can e.g. be in the form of a general indication like a version number, e.g. {..., "version":3, ... } or in the form of a more specific indication, e.g. {..., "mayUseTrackingPrevention":true, ...}, or {..., "useTrackingPrevention":true, ...}. If the Enrollee supports device tracking prevention and if it sees information in the DPP Configurator Connector that it can use device tracking prevention, it may e.g. use the device tracking prevention by encrypting the NAK in its Connector as described in [2018PF00508].

In a further embodiment the security protocol includes a setup protocol providing the following actions. Initially a certificate is obtained from a certification authority. Subsequently, security parameters are provided using the certificate, for example generated and encrypted or integrity protected based on the certificate, e.g. using keys generated or security algorithms indicated in the certificate. Subsequently, the security parameters are transferred to the device via setup messages. The certificate includes the grading indicator, which grading indicator is indicative of constraints of the security parameters. For example, the certificate may be provided by a certification server based on a certification request message from the device to be configured or from a configurator. The request may contain a request to include the grading indicator, or an indication of a parameter or setting to be protected via a grading indicator.

In a device arranged to apply the above security protocol, the device processor is arranged for retrieving the grading indicator from the certificate. Subsequently, the processor is arranged to receive and/or transmit the setup messages. Also, the processor is arranged to determine the security level based on the setup messages and the constraints of the security parameters. Optionally, the security protocol provides set-up of cryptographic security parameters. The cryptographic security parameters may include one or more of a cipher algorithm to use, a key size to use, a cryptographic hash algorithm to use, or further options or parameters of the security protocol or cryptographic processes to use.

An example of the above negotiation or set-up of cryptographic parameters is Transport Layer Security (TLS). Many cryptographic protocols, of which TLS 1.3 [RFC 8446] is one, have built-in flexibility for the use of cryptographic primitives such as cipher algorithm to use, key size to use, cryptographic hash algorithm to use or variations of the protocol to use, e.g. to use Perfect Forward Secrecy (PFS) or not. Below TLS 1.3 [RFC 8446] is further elucidated in detail to show how the above enhancements may be used. Use in other cryptographic protocols may be easily derived from this explanation.

In the TLS Negotiation Phase, the first message a client sends is a ClientHello message specifying the highest TLS protocol version it supports, a random number, a list of suggested cipher suites and compression methods. The reply of the server to the ClientHello message may be the ServerHello message, containing among other things the selected cipher suite. The ClientHello and ServerHello messages are not integrity protected at first. However, using any of the three possible modes (EC)DHE (Diffie-Hellman over either finite fields or elliptic curves), Pre-Shared key (PSK)-only, or PSK with (EC)DHE, when a shared key has been successfully established between client and server, TLS set-up is finished by the server sending a "Finished" message to the client containing a keyed hash over the entire set-up exchange, so including the ClientHello and ServerHello messages, based on a key derived from the shared key that they just have established. After that, the client sends its own "Finished" message to the server, which also contains a keyed hash over the entire set-up exchange, so including the ClientHello and ServerHello messages. A keyed hash function is a hash function that creates a hash over its input based, which hash value is also based on the value of a (secret) key. So, the ClientHello and/or ServerHello messages, are integrity protected later on in the TLS protocol.

TLS has many variations and there are several possibilities for the cryptographic parameters of TLS. It may be possible by a hacker to change the set-up of TLS in a TLS server or client. The setup of a TLS server or client may also be changed accidentally or on purpose from the originally intended setup by any administrator of the TLS server or client. E.g. the "Internet options" menu of the browser Internet Explorer gives users the possibility to allow or disallow the use of specific TLS versions.

So, the setup of communication negotiation protocols may need protection against a downgrade attack. The above configuration parameters may also be changed by administrators of the server, e.g. accidentally. They may also be changed on purpose by a hacker or malicious insider. The above enhancements may make the setup of TLS more secure for the administrator of a TLS server or client. This may apply also in other protocols where the messages for negotiating the values of parameters are not integrity protected.

When setting up a server for TLS, an initial administrator has to obtain a certificate from a Certification Authority (CA). Once created, a certificate cannot be accidentally or on purpose be changed, because TLS clients would not accept that certificate anymore. In addition to acquiring a certificate, a (possibly different) administrator has to set up the use of TLS. Such administrator has to set up e.g.
- the Authenticated Encryption with Associated Data (AEAD) algorithm/ HMAC-based Extract-and-Expand Key Derivation Function (HKDF) hash pairs the server is allowed to use,
- the (EC)DHE groups the server is allowed to use,
- the signature algorithms that the server is allowed to use, and
- the minimum version of TLS that the owner device of the certificate is allowed to use.

It is to be noted that the minimum version of the TLS protocol that is allowed to be used is functionally different from the TLS version of the certificate itself. For example, a TLS certificate may have an indicator that it is formatted according to TLS VI.4, but the grading indicator in this TLS VI.4 certificate may, for example, indicate that only TLS versions from TLS VI.4 are allowed, or that TLS VI.2 or higher must be used.

When requesting a certificate for the server from the certification authority, the initial administrator may include in the request dedicated grading data to request that the certificate includes a grading indicator, e.g. indicating constraints, security options, allowable or not-allowable values for the above mentioned or other TLS configuration parameters, etc.

The current syntax of certificates is specified in X509 v3 [RFC 5280] using Abstract Syntax Notation One (ASN.1), [X.680] as a specification language. Certificates use Object Identifiers (OID) as indicators for many things. For example, the OID to use for the indication of the organizationName is 2.5.4.10 while the OID to indicate RSA encryption, a particular asymmetric encryption algorithm, is 1.2.840.113549.1.1.1. The OID to indicate a particular extension in the "Extensions" component of a certificate starts with 2.5.29 and the OID to indicate the Basic Constraints extension of section 4.2.1.9 of X509 v3 [RFC 5280] is 2.5.29.19.

Possible values of TLS parameters of TLS are indicated in TLS messages by numbers specified in TLS 1.3 [RFC 8446], e.g. the hexadecimal value (0x0403) indicates the signature algorithm "Elliptic Curve Digital Signature Algorithm", see [FIPS186-4], using elliptic curve P-256, see [FIPS186-4] and SHA256 as a hash algorithm, see [FIPS180-4].

Therefore, to enhance the certificate as proposed, X509 could be extended with an extension, e.g. called "allowedTLSParameters", indicated by a new OID 2.5.29.19.x, with x an appropriate value obtained from the organization maintaining this branch of the OID-tree, where this new extension contains an array of allowed TLS parameters indicated with values as specified in TLS 1.3 [RFC 8446]. As an example, the type to use for this new extension may be expressed in ASN.1 as AllowedTLSParameters ::= SEQUENCE { allowedTLSParameter INTEGER }

The ASN.1 der encoding of an instantiation of the type "AllowedTLSParameters" may be stored in the component called "extnValue" in the "extensions" component of the type "TBSCertificate", see clause A.1 of X509 v3 [RFC 5280].

Instead of the hexadecimal values specified in TLS 1.3 [RFC 8446], the new extension may also use Object Identifiers (OID) to indicate allowed values of parameters. The advantage of using OIDs is that OIDs can be used by any protocol to indicate cryptographic parameters and the hexadecimal values specified in TLS 1.3 [RFC 8446] can only be used to indicate this for the TLS protocol. As an example, the type to use for this new extension that uses OIDs may be expressed in ASN.1 as

```
AllowedTLSParameters ::= SET OF AllowedTLSParameter
                AllowedTLSParameter ::= SEQUENCE {
                allowedTLSParameterType OBJECT IDENTIFIER,
                allowedTLSParameterValues AllowedTLSParameterValues OPTIONAL
                -- allowedTLSParameterValues may be needed if the object identifier alone is not
 sufficient
 }AllowedTLSParameterValues::= SET OF AllowedTLSParameterValue
                AllowedTLSParameterValue ::= INTEGER
```

The type AllowedTLSParameterValues above is just an example. There could be other information in it besides integer numbers, e.g. object identifiers specifying cypher algorithms, or type/value pairs similar to the AllowedTLSParameter type.

One of the possible OIDs for the component allowedTLSParameterType may be an OID that indicates the minimum allowed version number of the TLS protocol that must be used when using this certificate with TLS. In this case, the component allowedTLSParameterValues may e.g. be a SET containing one INTEGER component with value 11, denoting TLS version 1.1.

When the enhanced TLS server sends a Certificate or a TLS client receives a certificate with information on the allowed TLS parameters to use, and the negotiated TLS parameters are not mentioned in the allowed TLS parameter list in the certificate, the server or client must to abort setting up the TLS protocol. So the grading indicator may indicate such a list, but may also contain constructs like algorithm X is allowed to be used if its version number is higher than or equal to Y or its quality is better than or equal to Y, e.g. ECC curves with a length of the prime of 256 bit or larger may be used. The grading indicator may also indicate a blacklist. i.e. a list of TLS parameters that are not allowed to be used. The black list may also contain constructs like algorithm X is not allowed to be used if its version number is lower than or equal to Y or its quality is worse than or equal to Y, e.g. ECC curves with a length of the prime of 255 bit or smaller may be not used.

TLS clients can also have certificates that the TLS server can use to authenticate the TLS clients and which are used in the TLS setup and for the derivation of session keys. Similar to above described TLS server certificates, a TLS client certificate can also contain allowed or disallowed values, or allowed minimum values, for TLS parameters.

Therefore, when using the grading indicator for TLS, an administrator of a TLS server or client can request a certificate for the TLS client or server with an indication of the allowed or disallowed values, or allowed minimum values, for TLS parameters. Such a TLS client or server will only use values of TLS parameters that are allowed by the certificate. Changing the configuration of the TLS client or server will not result in the TLS client or server to use not allowed values, so the setup of TLS server or client is made more secure for its administrator(s).

In a further embodiment, negotiation of cryptographic parameters for wireless access to a network using certificates is described, using WPA-Enterprise as a detailed example. WPA (Wi-Fi Protected Access) is a specification for Wi-Fi wireless network security. The Wi-Fi Alliance (WFA) maintains the WPA specification and the certification program for WFA. WPA comes in two flavors, WPA-PSK (Pre Shared Key) or WPA-Personal on the one hand and WPA-Enterprise on the other hand. There are three major releases of WPA, namely WPA, WPA2, and WPA3 [WPA3], where each of the three support the two flavors.

WPA-PSK requires each Wi-Fi device (also APs) to possess the PSK (Pre Shared Key) of the network to connect to. The PSK is usually the same for all users of a particular network. In contrast, WPA-Enterprise requires a RADIUS server, which handles the task of authenticating network users access. The actual authentication process is specified in [802.1x], is based on the 802.1x policy and comes in several different systems labelled EAP (Extensible Authentication Protocol). Because each device is authenticated before it connects, a personal, encrypted tunnel is effectively created between the device and the network.

A WPA-Enterprise AP will only allow unauthorized Wi-Fi devices to communicate with a RADIUS server. Once the RADIUS server has authenticated a device, the just authenticated device and the AP establish a PMK (Pairwise Master Key) for the Wi-Fi security between them, which PMK is also based on information exchanged in the authentication process with the RADIUS server.

Several EAP protocols can be used by the RADIUS server, of which EAP-TLS [RFC 5216] and EAP-TTLS/PAP [RFC 5281] are EAP versions that use certificates.

EAP-TLS requires all Wi-Fi devices to have a certificate for network access, while a server certificate for (RADIUS) server authentication is optional. This is the other way around for EAP-TTLS/PAP, where a server certificate is mandatory and a client certificate is optional.

A difference between WPA3-Enterprise and WPA2-Enterprise is that WPA3-Enterprise offers a requirement for server certificate validation to be configured to confirm the identity of the server to which the device is connecting.

In this description, WPA-Enterprise may mean WPA-Enterprise, WPA2-Enterprise, WPA3-Enterprise or any of their future successors.

Similar to above embodiments, the entity requesting a certificate for use in WPA-Enterprise and the entity configurating an AP or Wi-Fi device for WPA-Enterprise use may be different. The proposed enhancements make the setup of WPA-Enterprise more secure for the administrator(s) of a TLS server or client.

The negotiation of the security of the Wi-Fi connection between a Wi-Fi device and an AP may be done using Robust Security Network elements (RSNE, clause 9.4.2.25 of [802.11]) in messages exchanged between them before the device can associate with the AP, so e.g. in Probe Requests sent by devices and Probe Responses and beacons sent by APs. An RSNE may contain a Pairwise Cipher Suite List and an AKM (authentication and key management) Suite List. The Pairwise Cipher Suite List lists the ciphers that the device supports, indicated by Cipher Suite selectors, e.g. Cipher Suite selector 00-0F-AC:4 indicates the CCMP-128 algorithm. The AKM Suite List lists the AKMs that the device supports, indicated by AKM Suite selectors. An AKM is a protocol to authenticate a device and/or AP. E.g. AKM Suite selector 00-0F-AC:1 indicates Authentication negotiated over IEEE Std 802.1X, which means authentication using a Radius server.

Probe Requests, Probe Responses and Beacons are not integrity protected, and could be changed by a MitM attacker. However, a device is never able to use a protocol or algorithm that it does not support. It is also not able to finish a protocol successfully for which it does not have the required information. E.g., a device not knowing the passphrase is not able to use WPA-Personal for associating with an AP. Similarly, other security processes like EAP-TLS and EAP-TTLS/PAP may also do some negotiation.

After a device, server or AP has been provisioned with an initial certificate, there are still several choices that may be made for the setup of the security and that could be changed by an attacker or a careless administrator. E.g., a device set up for EAP-TLS must have a certificate. However, it is optional for the RADIUS server in this case to have a certificate too for server authentication. It may be that the device is originally set up to accept only RADIUS servers when they can engage in server side authentication. A careless other administrator or a hacker may be able to change that later on, thereby reducing the level of security. By using the above enhancements regarding the grading indicator, the original administrator can apply for a device certificate that includes a constraint that server side authentication using a server certificate must always be used. The device will then refuse to authenticate to RADIUS servers that do not perform server side authentication, even if later on, a careless administrator or hacker has changed the setup of the device to not require this. Another constraint added to the certificate can be the size of the PMK to use after authentication. E.g. the constraint may be that the PMK to use must be larger than 128 bits. The constraints can be included in a certificate via the grading indicator, e.g. as discussed with the earlier embodiments.

In a further embodiment, the first device is a client device and the second device is a server device, and the grading indicator is indicative of a client constraint that client side authentication using a certificate is required. The processor in the client device is arranged for retrieving the client constraint from the certificate. Subsequently, the processor is arranged to receive the setup messages and applying client side authentication based on the client constraint. In a practical example, similar to a device set up for EAP-TLS, an AP set up for EAP-TTLS/PAP must have a certificate. However, client side authentication is optional. The administrator requesting a certificate for the AP may use the invention to request a certificate with a constraint that client side authentication using a certificate is always required. The AP will then always refuse to finish EAP-TTLS/PAP successfully with devices that cannot present a certificate during this protocol, even if later on, a careless administrator or hacker has changed the setup of the AP to not requiring a client certificate.

Therefore, the above enhancements make the set-up of WPA-Enterprise on devices and APs using EAP-TLS or EAP-TTLS/PAP more secure and offer protection against a MitM attacker who changes security negotiation messages.

The above embodiments have been described using devices. However, the various protocols, messages and processor actions may be executed by corresponding method steps, which can easily be derived from the above description. The methods may be executed, for example, by circuitry and software in the processor or a Wi-Fi controller. Suitable encryption and decryption functions have been described above. Many different ways of implementing the methods are possible, as will be apparent to a person skilled in the art. For example, the order of the stages or steps can be varied or some stages may be executed in parallel. Moreover, in between steps other method steps may be inserted. The inserted steps may represent refinements of the method such as described herein or may be unrelated to the method.

Computer program products, downloadable from a network and/or stored on a computer-readable medium and/or microprocessor-executable medium, are provided that comprise program code instructions for implementing the above method, connection sequence, security process and further operations when executed on a computer device. So, the methods according to the invention may be executed using software, which comprises instructions for causing a processor system to perform the respective method.

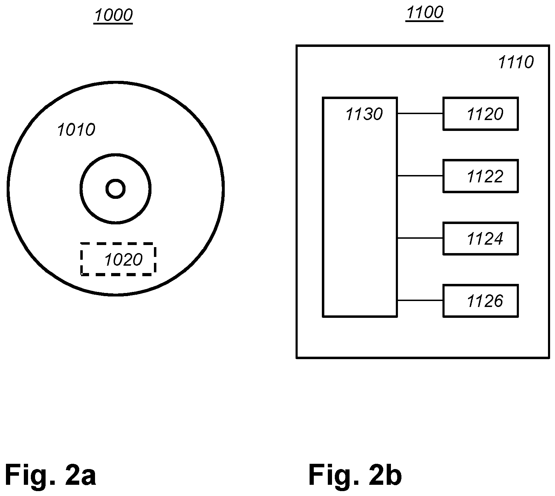

Fig. 2a shows a computer readable medium 1000 having a writable part 1010 comprising a computer program 1020, the computer program 1020 comprising instructions for causing a processor system to perform one or more of the above methods in the system as described with reference to Fig. 1. The computer program 1020 may be embodied on the computer readable medium 1000 as physical marks or by means of magnetization of the computer readable medium 1000. However, any other suitable embodiment is conceivable as well. Furthermore, it will be appreciated that, although the computer readable medium 1000 is shown here as an optical disc, the computer readable medium 1000 may be any suitable computer readable medium, such as a hard disk, solid state memory, flash memory, etc., and may be non-recordable or recordable. The computer program 1020 comprises instructions for causing a processor system to perform said methods.

Typically, devices that execute the above process, each comprise a processor coupled to a memory containing appropriate software code stored at the devices; for example, that software may have been downloaded and/or stored in a corresponding memory, e.g., a volatile memory such as RAM or a non-volatile memory such as Flash (not shown). The devices may for example be equipped with microprocessors and memories (not shown). Alternatively, the devices may, in whole or in part, be implemented in programmable logic, e.g., as field-programmable gate array (FPGA). The devices and server may be implemented, in whole or in part, as a so-called application-specific integrated circuit (ASIC), i.e. an integrated circuit (IC) customized for their particular use. For example, the circuits may be implemented in CMOS, e.g., using a hardware description language such as Verilog, VHDL etc.

Fig. 2b shows in a schematic representation of a processor system 1100 according to an embodiment of the device or server as described with reference to Fig. 1. The processor system may be embodied by one or more circuits 1110, e.g. each comprising one or more integrated circuits. Circuit 1110 comprises a processing unit 1120, e.g., a CPU, for running computer program components to execute a method according to an embodiment and/or implement its modules or units. Circuit 1110 comprises a memory 1122 for storing programming code, data, etc. Part of memory 1122 may be read-only. Circuit 1110 may comprise a communication element 1126, e.g., a transceiver with an antenna, connectors or both, and the like. Circuit 1110 may comprise a dedicated integrated circuit 1124 for performing part or all of the processing defined in the method. Processor 1120, memory 1122, dedicated IC 1124 and communication element 1126 may be connected to each other via an interconnect 1130, say a bus. The processor system 1110 may be arranged for contact and/or contact-less communication, using an antenna and/or connectors, respectively.

Software may only include those steps taken by a particular sub-entity of the system. The software may be stored in a suitable storage medium, such as a hard disk, a floppy, a memory etc. The software may be sent as a signal along a wire, or wireless, or using a data network, e.g., the Internet. The software may be made available for download and/or for remote usage on a server. A method according to the invention may be executed using a bit stream arranged to configure programmable logic, e.g., a field-programmable gate array (FPGA), to perform the method. It will be appreciated that the software may be in the form of source code, object code, a code intermediate source and object code such as partially compiled form, or in any other form suitable for use in the implementation of the methods according to the invention. An embodiment relating to a computer program product comprises computer executable instructions corresponding to each of the processing steps of at least one of the methods set forth. These instructions may be subdivided into subroutines and/or be stored in one or more files that may be linked statically or dynamically. Another embodiment relating to a computer program product comprises computer executable instructions corresponding to each of the means of at least one of the systems and/or products set forth.

It will be appreciated that, for clarity, the above description describes embodiments of the invention with reference to different functional units and processors. However, it will be apparent that any suitable distribution of functionality between different functional units or processors may be used without deviating from the invention. For example, functionality illustrated to be performed by separate units, processors or controllers may be performed by the same processor or controllers. Hence, references to specific functional units are only to be seen as references to suitable means for providing the described functionality rather than indicative of a strict logical or physical structure or organization. The invention can be implemented in any suitable form including hardware, software, firmware or any combination of these.

It is noted that in this document the word 'comprising' does not exclude the presence of elements or steps other than those listed and the word 'a' or 'an' preceding an element does not exclude the presence of a plurality of such elements, that any reference signs do not limit the scope of the claims, that the invention may be implemented by means of both hardware and software, and that several 'means' or 'units' may be represented by the same item of hardware or software, and a processor may fulfill the function of one or more units, possibly in cooperation with hardware elements. Further, the invention is not limited to the embodiments, and the invention lies in each and every novel feature or combination of features described above or recited in mutually different dependent claims.

In summary, this application relates to devices and methods to establish secure communication between a first and a second device over a physical channel according to a security protocol. The protocol establishes first integrity data in the first device and second integrity data in the second device. The protocol has at least two security levels. The applied security level is selectable based on grading information transferred via the physical channel. Advantageously, a grading indicator indicative of a minimum security level as minimally required in at least one of the first and second device is transferred via the physical channel, while integrity protection of the grading indicator is provided based on the integrity data. Thereby, a man-in-the-middle attack to downgrade the security level may be prevented.

### Referenced documents:

[802.11] IEEE Computer Society, "IEEE Standard for Information Technology-Telecommunications and Information Exchange Between Systems - Local and Metropolitan Area Networks - Specific requirements Part 11: Wireless LAN Medium Access Control (MAC) and Physical Layer (PHY) Specifications," (IEEE Std. 802.11-2016), December 2016.
[802.IX] IEEE Std 802.1X™-2020, IEEE Standard for Local and Metropolitan Area Networks: Port-Based Network Access Control.
[X.680] ITU-T Recommendation X.680 (2002)| ISO/IEC 8824-1:2002, Information technology - Abstract Syntax Notation One (ASN.1): Specification of basic notation.
[DH] Diffie, W.; Hellman, M. (1976), "New directions in cryptography", IEEE Transactions on Information Theory, 22 (6): 644-654
[DPP] Device Provisioning Protocol - Technical Specification - Version 1.0, Wi-Fi Alliance, 2018.
[FIPS180-4] FIPS180-4, "Secure Hash Standard", United States of America, National Institute of Standards and Technology, Federal Information Processing Standard (FIPS) 180-4
[FIPS186-4] U.S. National Institute of Standards and Technology, "DIGITAL SIGNATURE STANDARD", Federal Information Processing Standard FIPS-186-4, July 2013.
[RFC 5216] RFC 5216, The EAP-TLS Authentication Protocol, March 2008, https://datatracker.ietf.org/doc/rfc5216/
[RFC 5280] RFC 5280, Internet X.509 Public Key Infrastructure Certificate and Certificate Revocation List (CRL) Profile, May 2008, https://datatracker.ietf.org/doc/rfc5280/
[RFC 5281] RFC 5281, Extensible Authentication Protocol Tunneled Transport Layer Security Authenticated Protocol Version 0 (EAP-TTLSv0), August 2008, https://datatracker.ietf.org/doc/rfc5281/
[RFC 8446] RFC 8446, The Transport Layer Security (TLS) Protocol Version 1.3, August 2018, https://datatracker.ietf.org/doc/rfc8446/
[WFEC_2] Wi-Fi Easy Connect™ Specification, Version 2.0, December 14, 2020, Wi-Fi Alliance.
[WPA3] WPA3™ Specification, Version 3.0, December 14, 2020, Wi-Fi Alliance, (WFA), www.wi-fi.org
[2018PF00508] Patent application WO2020043634A1

## Claims

1. A method to establish a security level for communication between a first device and a second device over a physical channel according to a security protocol, the security protocol providing
- establishing first integrity data in the first device and second integrity data in the second device; and
- at least two security levels, the security level being selectable based on grading information transferred via the physical channel;
the method comprising
- transferring via the physical channel a grading indicator indicative of a minimum security level as minimally required in at least one of the first and second device; and
- providing integrity protection of the grading indicator based on the integrity data.

2. A device, the device being a first device (110) adapted to establish a security level for communication between the first device and a second device over a physical channel according to a security protocol, the security protocol providing
- establishing first integrity data in the first device and second integrity data in the second device, and
- at least two security levels, the security level being selectable based on grading information transferred via the physical channel;
the device comprising a processor (112) arranged for
- sending or receiving via the physical channel a grading indicator indicative of a minimum security level as minimally required in at least one of the first and second device;
- when sending, including protection data for the grading indicator based on the integrity data;
- when receiving, verifying the protection data based on the integrity data; and
- applying at least the minimum security level for the communication between the first device and the second device.

3. Device according to claim 2, wherein the security protocol is based on a device provisioning protocol that further requires a configurator adapted to establish communication between the first device and the second device in a wireless network,
the configurator being arranged for
- inserting the grading indicator in a connector message; and
- sending the connector message to the first device, and
the processor (112) in the first device being arranged for
- receiving the connector message; and
- retrieving the grading indicator from the connector message.

4. Device according to claim 3, wherein
the security protocol according to the first security level requires determining a pairwise master key in both the first and the second device based on private and public key material, the pairwise master key being used for determining session keys for encrypted communication between the first device and the second device, and
the security protocol according to the second security level requires determining the pairwise master key involving ephemeral Diffie-Hellman key pairs, and
the processor (112) is arranged to apply the second security level when so indicated by the grading indicator.

5. Device according to claim 3 or 4, wherein
the security protocol according to the first security level does not prevent tracking of the first device across multiple communication sessions in the network based on recurring data in messages of the first device, and
the security protocol according to the second security level requires avoiding or modifying said recurring data to prevent tracking, and
the processor (112) is arranged to apply said tracking prevention when so indicated by the grading indicator.

6. Device according to any one of the claims 2-5, wherein in the security protocol at least part of the grading information lacks integrity protection.

7. Device according to claim 2, wherein the security protocol comprises a setup protocol that comprises
- obtaining a certificate from a certification authority;
- providing security parameters using the certificate
- transferring the security parameters to the device via setup messages,
wherein the certificate includes the grading indicator, the grading indicator being indicative of constraints of the security parameters,
and the processor (112) is arranged for
- retrieving the grading indicator from the certificate;
- receiving the setup messages; and
- determining the security level based on the setup messages and the constraints of the security parameters.

8. Device according to claim 7, wherein the security protocol provides set-up of cryptographic security parameters, the cryptographic security parameters including one or more of:
- cipher algorithm to use;
- key size to use;
- cryptographic hash algorithm to use;
- minimum version of the protocol to use;
- options of the protocol to use.

9. Device according to claim 7 or 8, wherein the first device is a client device and the second device is a server device, and the grading indicator is indicative of a client constraint that client side authentication using a certificate is required,
and the processor (112) is arranged for
- retrieving the client constraint from the certificate;
- receiving the setup messages; and
- applying client side authentication based on the client constraint.

10. Device according to claim 3, wherein the security protocol is based upon the Device Provisioning Protocol for configuring Wi-Fi devices as defined in [DPP], and wherein the connector message is based on the Connector as defined in the Device Provisioning Protocol modified by inserting the grading indicator;
wherein the processor (112) is adapted to receive the modified Connector.

11. Device according to claim 5, wherein the security protocol is based upon the Device Provisioning Protocol for configuring Wi-Fi devices as defined in [DPP], and wherein the connector message is a reconfiguration Connector based on the Connector generated for use in a Reconfiguration Authentication Request message as defined in the Device Provisioning Protocol;
the configurator inserting the grading indicator in the reconfiguration Connector, the grading indicator being indicative of a prevention constraint indicating that device tracking prevention can or should be used by a device that wants to be reconfigured,
and the processor (112) is arranged for
- retrieving the prevention constraint from the modified connector;
- applying tracking prevention during reconfiguration based on the prevention constraint.

12. Device according to any one of the claims 2-11, wherein the physical channel is a wireless communication channel.

13. Device according to any one of the claims 2-12, wherein the integrity data is applied for providing integrity protection of messages transferred via the physical channel.

14. Method for use in a device (110), the method establishing a security level for communication between the device and a further device (120) over a physical channel according to a security protocol, the security protocol providing
- establishing first integrity data in the device and second integrity data in the further device, and
- at least two security levels, the security level being selectable based on grading information transferred via the physical channel;
the method being arranged for
- sending or receiving via the physical channel a grading indicator indicative of a minimum security level as minimally required in at least one of the device and further device;
- when sending, including protection data for the grading indicator based on the integrity data;
- when receiving, verifying the protection data based on the integrity data; and
- applying at least the minimum security level for the communication between the device and the further device.

15. Computer program product downloadable from a network and/or stored on a computer-readable medium and/or microprocessor-executable medium, the product comprising program code instructions for implementing a method according to any one of claims 1 or 14 when executed on a computer.
